# EUROPÄISCHE PATENTANMELDUNG

(11) **EP 2 192 088 A1**
(43) Veröffentlichungstag der Anmeldung: **02.06.2010**
(21) Anmeldenummer: 08169857.3
(22) Anmeldetag: 25.11.2008
(51) Int. Cl.: C01F 11/02

(54) **Verfahren zur Herstellung von Calciumhydroxid**

(71) Anmelder: Ferro Duo GmbH, 47053 Duisburg (DE)
(72) Erfinder: Kehrmann, Alexander, 46509, Xanten (DE)
(74) Vertreter: HOFFMANN EITLE

(57) **Zusammenfassung**

Die vorliegende Erfindung betrifft ein Verfahren zur Herstellung von weißem Calciumhydroxid aus rotem Gips, der eine eisenhaltige Phase enthält, wobei die rot färbende eisenhaltige Phase durch gezielte Mitfällungsreaktionen entfernt wird. Die Erfindung betrifft weiterhin die Verwendung eines roten Gipses, der eine eisenhaltige Phase enthält, zur Herstellung von weißem Calciumhydroxid.

## Beschreibung

### Technisches Gebiet der Erfindung

Die vorliegende Erfindung betrifft ein Verfahren zur Herstellung von weißem Calciumhydroxid aus rotem Gips, der eine eisenhaltige Phase enthält. Das Verfahren umfasst das Mischen des roten Gipses mit einer wässrigen alkalischen Lösung, das Isolieren eines unlöslichen Rückstands, sowie gezielte Mitfällungsreaktionen zur Abtrennung von rot färbenden eisenhaltigen Phasen aus dem Ausgangsmaterial. Ferner betrifft die vorliegende Erfindung die Verwendung eines roten Gipses, der eine eisenhaltige Phase enthält, zur Herstellung von weißem Calciumhydroxid.

### Stand der Technik

Der in der Natur vorkommende Gips ist Calciumsulfat-Dihydrat (CaSO₄• 2 H₂O) und kristallwasserfreies Calciumsulfat, das als Anhydrid bezeichnet wird. Neben den natürlichen Vorkommen fällt Gips in großen Mengen als industrielles Nebenprodukt an. Es bildet sich meist durch Umsetzung von Calciumverbindungen, wie Calciumcarbonat oder Calciumhydroxid, mit Schwefelsäure oder Schwefeldioxid.

Bei der Herstellung von Titandioxid aus Ilmenit (FeTiO₃) nach dem Sulfatverfahren wird angereichertes Titaneisenerz mit konzentrierter Schwefelsäure aufgeschlossen, wobei das im Erz enthaltene Eisenoxid zu Eisensulfat (Grünsalz) reagiert und eine verdünnte Schwefelsäure, die sogenannte Dünnsäure, als Nebenprodukt anfällt. Die Verwertung oder die schadlose Beseitigung dieser Dünnsäure ist in Europa und den meisten anderen Produktionsstandorten für Titandioxid vorgeschrieben.

EP-A 577 272 beschreibt ein Verfahren zur Verwertung von Dünnsäure durch teilweise Neutralisation mit Calciumcarbonat. Hierbei fällt neben weißem, verwertbaren Gips auch eine Metallsulfatlösung an, die durch Zugabe von Calciumoxid oder Calciumcarbonat auf einen pH-Wert von 9 gebracht wird. Der hierbei entstehende, sogenannte "rote Gips" wird deponiert und enthält 60-90% CaSO4•2 H2O; 3-35% Eisen(II)- und Eisen(III)-oxide und Eisenhydroxide; 0,3-2% TiO₂; 0,1-4% SiO₂; 0,1-0,8% Na₂O; 0,1-5% CaCO₃; 0,1-0,4% MgO; 0,1-0,2% Kalium und 0,1-0,2% Phosphor. Pro Tonne des erzeugten Titandioxids werden so 1 bis 2,5 t "roter Gips" gebildet, dessen Deponierung sowohl wertvolle Rohstoffe als auch Deponieraum kostet.

WO 03/070657 beschreibt die Verwendung von "rotem Gips" zur Stabilisierung von Erd- und Zementmischungen, deren Festigkeit und Verarbeitbarkeit durch die Beimischung von "rotem Gips" erhöht werden.

DE 197 08 907 beschreibt ein Verfahren mit dem durch organisches Material verunreinigter Gips gereinigt werden kann. Hierbei wird der verunreinigte Gips zunächst zerkleinert und anschließend unter Sauerstoff bei Temperaturen von 450-950 °C gebrannt. Alternativ hierzu beschreibt WO 98/51616 ein Verfahren, durch das Schwefelsäure enthaltende Abwässer durch eine pH-Wert abhängige Zugabe von Calcium enthaltendem basischen Materialien zu einem gereinigten Gips umgesetzt werden.

Ein bislang ungelöstes Bedürfnis der chemischen Industrie besteht jedoch an einem Verfahren, das den "roten Gips" chemisch wieder nutzbar macht und nicht lediglich auf die physikalisch-mechanische Verwertung und Aufbereitung des angefallenen "roten Gipses" oder auf dessen Vermeidung insgesamt abzielt.

Eine Aufgabe der vorliegenden Erfindung ist es daher, ein Verfahren bereitzustellen, welches den "roten Gips", wie er beispielsweise bei der Herstellung von Titandioxid nach dem Sulfatverfahren anfällt, einer chemischen Verwertung zuführt und so dessen Rohstoffe erneut verwendet werden können und dabei Deponieraum schont. Insbesondere ist es eine Aufgabe der vorliegenden Erfindung ein Verfahren bereitzustellen, welches aus "rotem Gips" wieder verwendbares weißes Calciumhydroxid liefert. Eine weitere Aufgabe der vorliegenden Erfindung ist es, den "roten Gips" als Ausgangsmaterial für die Herstellung von weißem Calciumhydroxid zu verwenden. Das erfindungsgemäß hergestellte weiße Calciumhydroxid zeichnet sich dadurch aus, dass es keine rot färbenden eisenhaltigen Phasen mehr enthält.

### Beschreibung der Erfindung

Es wurde gefunden, dass mit Hilfe des erfindungsgemäßen Verfahrens aus dem rot gefärbten Gips weißes Calciumhydroxid gewonnen werden kann. Entscheidend dabei ist zunächst die möglichst vollständige Abtrennung von Sulfat aus dem "roten Gips". Die Rotfärbung der Gipsprobe ist auf das Vorhandensein einer eisenhaltigen Phase, insbesondere Geothit und/oder Hämatit zurückzuführen.

Ein weiterer entscheidender Verfahrensschritt der vorliegenden Erfindung ist die Abtrennung von rot färbenden eisenhaltigen Phasen aus dem Ausgangsmaterial. Überraschenderweise wurde gefunden, dass diese rot färbenden eisenhaltigen Phasen durch gezielte Mitfällungsreaktionen entfernt werden können. Hierbei ist unter Mitfällung eine Fällungsreaktion aus einer Lösung zu verstehen, wobei der gefällte unlösliche Rückstand nicht hauptsächlich aus den zu entfernenden eisenhaltigen Phasen besteht, sondern diese lediglich bei der Fällung eines anderen unlöslichen Rückstands aus der Lösung entfernt werden und sich im unlöslichen Rückstand, beispielsweise durch Adsorption, Okklusion oder Mischkristallbildung, anreichern. Entscheidend für eine erfolgreiche Mitfällung der eisenhaltigen Phasen aus der Lösung ist die Einstellung des pH-Werts.

Das Verfahren der vorliegenden Erfindung zeichnet sich dadurch aus, dass zunächst durch gezielte Umsetzung des "roten Gipses" mit einer alkalischen Lösung und Isolierung des gebildeten unlöslichen Rückstands eine Abtrennung von Sulfat aus der Probe erreicht wird. Anschließende wird dieser Rückstand erneut gelöst und einer pH-Wert abhängigen fraktionierten Fällung unterworfen werden, wobei rot färbende eisenhaltige Phasen aus der Lösung mitgefällt und so aus der Lösung entfernt werden bis diese farblos und klar ist. Zur Herstellung von festem, weißem Calciumhydroxid wird anschließend der pH-Wert der farblosen Lösung weiter erhöht, bis weißes Calciumhydroxid ausfällt, welches isoliert und so gewonnen wird.

Vorteile dieses Verfahrens sind, die chemische Wiedernutzbarmachung der Rohstoffe des "roten Gipses" sowie das Einsparen von Deponiekosten und Deponieraum. Darüber hinaus kann das erhaltene weiße Calciumhydroxid mit den bekannten technischen Verfahren weiterverarbeitet werden, ohne das eine störende Rotfärbung des Ausgangmaterials die Verwendungsmöglichkeiten einschränkt.

Insbesondere stellt die vorliegende Erfindung das folgende Verfahren bereit.
(1) Ein Verfahren zur Herstellung von weißem Calciumhydroxid aus rotem Gips, der eine eisenhaltige Phase enthält, welches die folgenden Schritte umfasst: (A) Mischen und Rühren des roten Gipses mit einer wässrigen alkalischen Lösung; (B) Isolieren eines unlöslichen Rückstands; (C) Lösen des Rückstands, wobei der pH-Wert der Lösung kleiner als 2,5 ist; (D) Schrittweises Erhöhen des pH-Werts der Lösung aus (C) auf mindestens einen pH-Wert von 2,5; (E) Fällen eines roten Niederschlags, wobei rot färbende eisenhaltige Verbindungen mitgefällt werden; (F) Isolieren der verbleibenden Lösung; (G) Schrittweises Erhöhen des pH-Werts der Lösung aus (F) auf mindestens einen pH-Wert von 6; (H) Fällen eines Niederschlags und Isolieren der verbleibenden Lösung.
(2) Ein Verfahren gemäß Punkt (1), welches weiterhin die folgenden Schritte umfasst: (I) Schrittweises Erhöhen des pH-Werts der Lösung aus (H) auf mindestens einen pH-Wert von 13; und (J) Isolieren eines weißen Niederschlags, der aus Calciumhydroxid besteht.
(3) Ein Verfahren gemäß Punkt (1) oder (2), wobei die wässrige alkalische Lösung aus Schritt (A) eine wässrige Natriumhydroxidlösung und/oder eine wässrige Kaliumhydroxidlösung ist.
(4) Ein Verfahren gemäß mindestens einem der Punkte (1)-(3), wobei die Schritte (D) und/oder (G) und/oder wahlweise (I) jeweils mit einer wässrige Natriumhydroxidlösung und/oder einer wässrige Kaliumhydroxidlösung durchgeführt werden.
(5) Ein Verfahren gemäß Punkt (3) oder (4), wobei die wässrige Natriumhydroxidlösung und/oder die wässrige Kaliumhydroxidlösung eine Konzentration von 1-2,5 mol/L aufweist.
(6) Ein Verfahren gemäß mindestens einem der Punkte (1)-(5), wobei Schritt (C) mit Salpetersäure oder einem Salpetersäure/Wasser Gemisch erfolgt.
(7) Ein Verfahren gemäß mindestens einem der Punkte (1)-(6), wobei der rote Niederschlag aus Schritt (E) neben einer mitgefällten rot färbenden eisenhaltigen Phase hauptsächlich aus Natriumnitrat und/oder Kaliumnitrat besteht.
(8) Ein Verfahren gemäß mindestens einem der Punkte (1)-(7), wobei Schritt (A) durch mindestens einstündiges Rühren erfolgt.
(9) Ein Verfahren gemäß mindestens einem der Punkte (1)-(8), wobei Schritte (B) und/oder (E) und/oder wahlweise (J) durch Filtration oder Vakuumfiltration durchgeführt werden und optional die Filtrationsrückstände mit Wasser gewaschen werden.
(10) Ein Verfahren gemäß mindestens einem der Punkte (1)-(9), wobei der rote Gips Goethit und/oder Hämatit enthält.
(11) Ein Verfahren gemäß mindestens einem der Punkte (2)-(10), wobei der weiße Niederschlag aus Calciumhydroxid besteht.
   Sowie ferner die
(12) die Verwendung eines "roten Gipses", der eine eisenhaltige Phase enthält, zur Herstellung von weißem Calciumhydroxid.

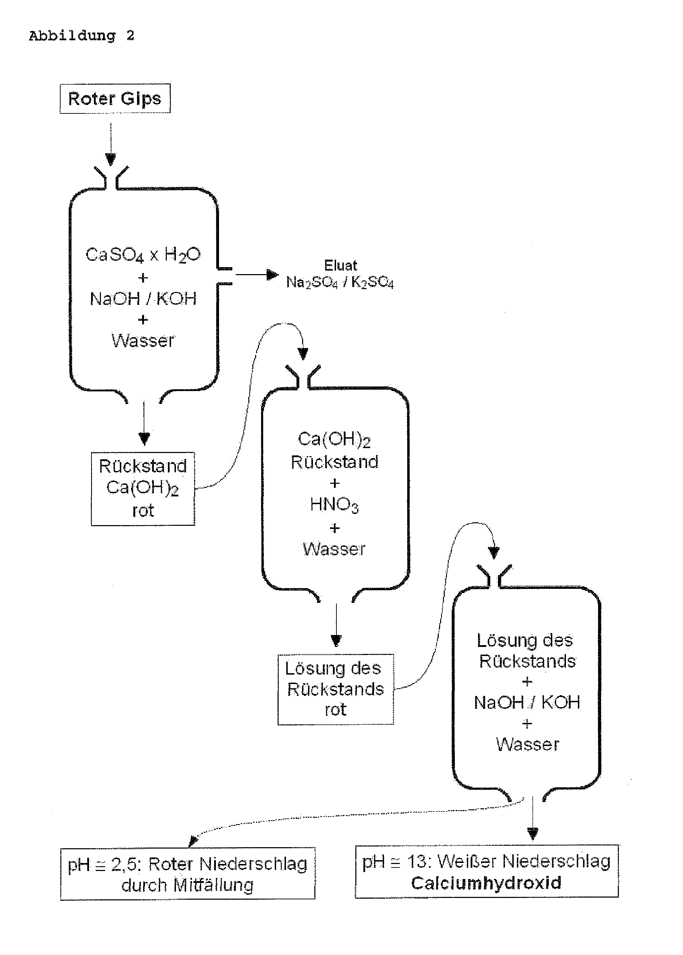

Für das vorliegende Herstellungsverfahren von weißem Calciumhydroxid aus "rotem Gips" (Abbildung 2) ist zunächst eine möglichst vollständige Abtrennung von Sulfat von Bedeutung. Hierzu wird erfindungsgemäß der "rote Gips" mit einer alkalischen Lösung, vorzugweise eine wässrige Natriumhydroxidlösung (Natronlauge) und/oder eine wässrige Kaliumhydroxidlösung (Kalilauge) mit einer Konzentration von 1 bis 2,5 mol/L, gemischt. Anschließend wird die Mischung, vorzugsweise 1 bis 8 Stunden, gerührt, wobei Calciumsulfat zu Calciumhydroxid umgesetzt wird und Natriumsulfat oder Kaliumsulfat gemäß den folgenden Reaktionsgleichungen gebildet wird.

CaSO₄ + 2 NaOH → Ca(OH)₂ + Na₂SO₄

CaSO₄ + 2 KOH → Ca(OH)₂ + K₂SO₄

Während Calciumhydroxid nahezu vollständig als unlöslicher Rückstand zurück bleibt, befindet sich das Natriumsulfat oder das Kaliumsulfat weitgehend in der alkalischen Lösung.

Der Rückstand wird, vorzugweise durch Filtration oder Vakuumfiltration, von der alkalischen Lösung isoliert, wobei optional der Filterkuchen mit Wasser gewaschen werden kann. Das wässrige alkalische Filtrat enthält im Wesentlichen gelöstes Natrium- oder Kaliumsulfat und Natron- oder Kalilauge, die durch Neutralisation mit verdünnter Schwefelsäure ebenfalls in gelöstes Natrium- oder Kaliumsulfat überführt werden kann. Das gelöste Natrium- oder Kaliumssulfat kann mit üblichen technischen Verfahren aus der Lösung abgeschieden und einer weiteren Verwendung zugeführt werden.

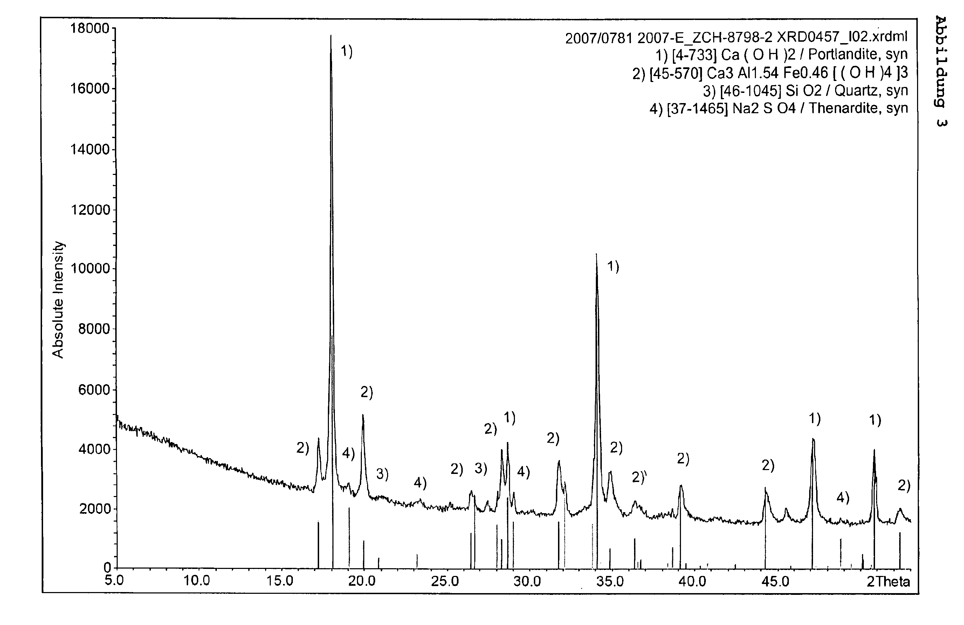

Der Rückstand besteht neben Calciumhydroxid auch aus Calcium-Aluminium-Eisenhydroxiden, die eine erkennbare Rotfärbung verursachen (Abbildung 3). Aus diesem Grund wird der Rückstand aus Calciumhydroxid und Calcium-Aluminium-Eisenhydroxiden erneut in einer Säure, vorzugweise in einem Wasser/Salpetersäure-Gemisch, gelöst, so dass der pH-Wert der Lösung kleiner als 2,5 ist. Anschließend wird der pH-Wert dieser Lösung schrittweise erhöht, vorzugweise durch Zugabe von Natron- und/oder Kalilauge, die vorzugsweise eine Konzentration von 1 bis 2,5 mol/L aufweisen/aufweist. Durch diese schrittweise Erhöhung des pH-Werts fallen die in der Lösung befindlichen Metalle nacheinander aus.

Bei einem pH-Wert von mindestens 2,5 fällt ein roter Niederschlag aus, der hauptsächlich aus Natrium- oder Kaliumnitrat besteht, wobei eine eisenhaltige rot färbende Phase mitgefällt wird. Nach einer Nachfällung eines geblichen Niederschlags bei einem pH-Wert von mindestens 6 ist die Lösung vollständig entfärbt und klar und enthält nahezu ausschließlich in Lösung befindliches Calciumhydroxid.

Soll anstelle einer farblosen Calciumhydroxidlösung weißes, festes Calciumhydroxid erhalten werden, wird anschließend der pH-Wert der verbleibenden farblosen Lösung auf mindestens 13 erhöht werden, wobei ein weißer Niederschlag ausfällt, der nahezu ausschließlich aus Calciumhydroxid besteht.

Die jeweiligen Niederschläge können von der verbleibenden Lösung, vorzugweise durch Filtration oder Vakuumfiltration, abgetrennt werden, wobei der Filterkuchen jeweils mit Wasser gewaschen werden kann.

Das so aus dem "roten Gips" gewonnene Calciumhydroxid kann chemisch-technisch mit den bekannten Verfahren weiterverarbeitet werden.

Die technische Umsetzung des erfindungsgemäßen Verfahrens kann in wie in Abbildung 2 dargestellt in einer nichtkontinuierlichen oder kontinuierlichen Rührkesselkaskade erfolgen. Alternativ hierzu können Durchflussreaktoren verwendet werden.

### Beschreibung der Zeichnungen

Abbildung 1: Röntgendiffraktogramm des getrockneten "roten Gipses".
Abbildung 2: Schematische Darstellung des Verfahrens zur Aufbereitung von "rotem Gips".
Abbildung 3: Röntgendiffraktogramm des getrockneten Rückstands(A) nach 1-stündiger Reaktion von "rotem Gips" mit Natronlauge.
Abbildung 4: Röntgendiffraktogramm des getrockneten Rückstands(B) nach 8-stündiger Reaktion von "rotem Gips" mit Natronlauge.
Abbildung 5: Röntgendiffraktogramm des roten Niederschlags nach Fällung bei einem pH-Wert von ungefähr 2,5.
Abbildung 6: Röntgendiffraktogramm des weißen Niederschlags nach Fällung bei einem pH-Wert von ungefähr 13.

### Beispiele

Im Folgenden soll die Erfindung mit Hilfe von Beispielen verdeutlicht werden.

### Bestimmung der Eigenschaften des "roten Gips"

Durch Trocknen des "roten Gipses" bei 105 °C wurde dessen Feuchte gemäß DIN 38414 auf 37,16% bestimmt.

Eine Sulfatbestimmung nach DIN EN 196-2 des getrockneten "roten Gips" ergab folgende Werte:

| | |
|---|---|
| SO3-Gehalt (Roter Gips, feucht): | 27,43% |
| SO3-Gehalt (Roter Gips, trocken): | 39,71% |

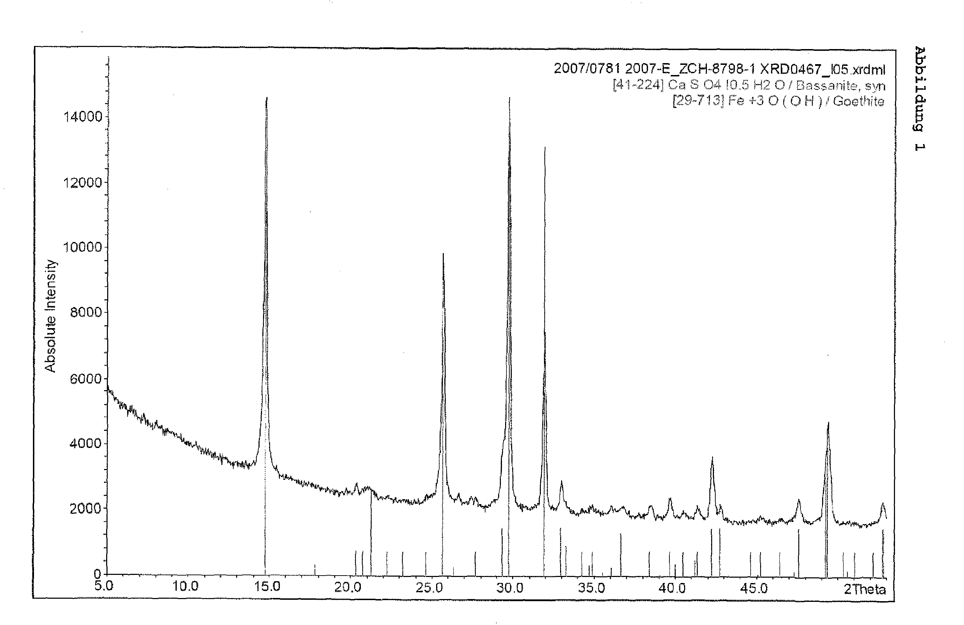

Eine an der getrockneten Probe des "roten Gips" durchgeführte Röntgenbeugungsanalyse (Abbildung 1) ergab, dass der rote Gips zum Großteil aus Calciumsulfat-Halbhydrat (Bassanit) und Eisen(III)oxidhydroxid (Geothite) besteht.

### (A) Umsetzung mit Natronlauge: 1 Stunde

35 g einer feuchten Probe des "roten Gips" wurde 1 Stunde lang in 250 mL NaOH (c = 2,5 mol/L) gerührt. Der gebildete Rückstand(A) wurde abfiltriert und einer Sulfatbestimmung und einer Röntgenbeugungsanalyse unterzogen. Die Sulfatbestimmung des Rückstands ergab folgende Werte:

| | |
|---|---|
| SO3-Gehalt (Rückstand(A), feucht): | 3,10% |
| SO3-Gehalt (Rückstand(A), trocken): | 10,03% |

Wie das Röntgendiffraktogramm in Abbildung 3 zeigt, besteht der getrocknete Rückstand(A) hauptsächlich aus Calciumhydroxid.

Das Eluat(A) wurde ionenchromatographisch (IC) auf Calcium untersucht. Der Calciumgehalt beträgt:
Ca²⁺-Gehalt (Eluat (A)): 11,91 mg/L NaOH

Die Messung bestätigt, dass der Großteil des Calciums als Calciumhydroxid als Rückstand(A) ausgefallen ist.

### (B) Umsetzung mit Natronlauge: 8 Stunden

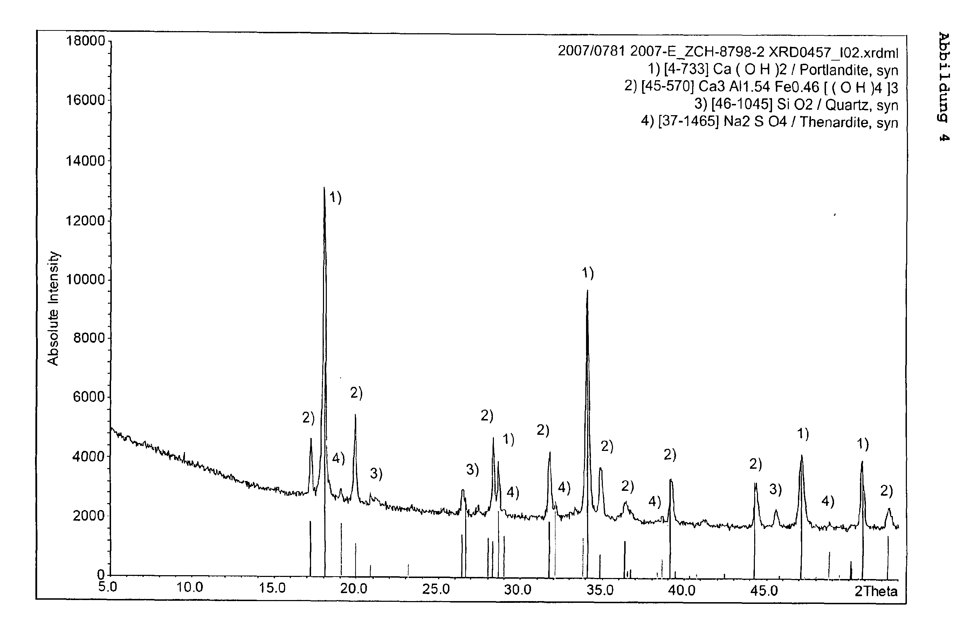

35 g des getrockneten "roten Gips" wurden 8 Stunden lang in 250 mL NaOH (c = 2,5 mol/L) gerührt. Der gebildete Rückstand(B) wurde abfiltriert und einer Röntgenbeugungsanalyse unterzogen (Abbildung 4).

Das Eluat(B) wurde ionenchromatographisch (IC) auf Calcium untersucht. Der Calciumgehalt beträgt:
Ca²⁺-Gehalt (Eluat (B)): 15,13 mg/L NaOH

Das Röntgendiffraktogramm und der Calciumgehalt des Eluats(B) bestätigen, dass trotz der verlängerten Reaktionszeit, keine signifikante Verbesserung der Umsetzung von "rotem Gips" zu Calciumhydroxid erzielt wird.

### (C) Umsetzung mit Natronlauge und Waschen des Filterkuchen

50 g einer feuchten Probe des "roten Gips" wurde 1 Stunde lang in 500 mL einer Natronlauge mit einer Konzentration von 1 mol/L gerührt. Der verbleibende Rückstand(C) wurde anschließend durch Vakuumfiltration isoliert, wobei in einem parallelen Versuch der Filterkuchen während der Vakuumfiltration mit ca. 500 mL Wasser gewaschen wurde. Die Filterrückstände wurde bei 105 °C getrocknet und anschließend einer Sulfatbestimmung nach DIN EN 196-2 unterworfen.

**Tabelle 1: Ergebnisse aus Beispiel (C)**

| | Masse [g] | Feuchte [%] | Sulfat als SO3 [%] |
|---|---|---|---|
| "Roter Gips" (feucht) | | | 27,4 |
| "Roter Gips" (trocken) | | | 39,7 |
| Filterkuchen (feucht) | 54,2 | 60,0 | 1,84 |
| Filterkuchen (trocken) | | | 4,60 |
| Gewaschener Filterkuchen (feucht) | 49,3 | 61,7 | 0,41 |
| Gewaschener Filterkuchen (trocken) | | | 1,06 |

Wie Tabelle 1 zu entnehmen ist, wird durch das Waschen des festen Rückstands der Sulfatgehalt im Rückstand deutlich verringert.

### Lösen des Rückstands(A) und fraktioniertes Fällen

5 g des getrockneten Rückstands(A) wurden in einem Wasser/Salpetersäure-Gemisch gelöst. Anschließend wurde die Lösung langsam mit Natronlauge (c = 2,5 mol/L) versetzt und so der pH-Wert schrittweise erhöht.

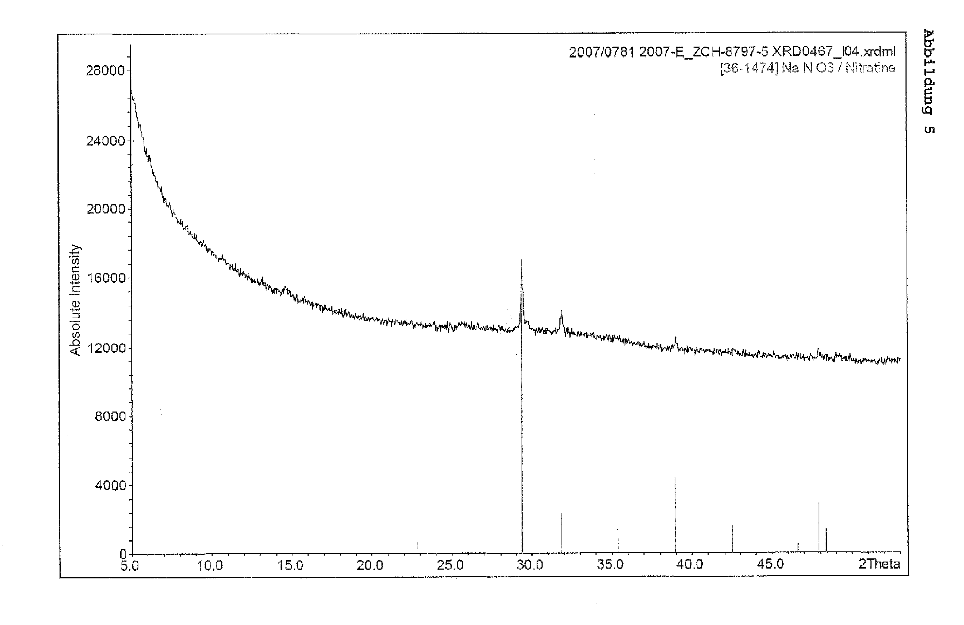

Bei einem pH-Wert von ungefähr 2,5 fiel ein roter Niederschlag aus, der einer Röntgenbeugungsanalyse unterzogen wurde (Abbildung 5). Das Röntgendiffraktogramm zeigt, dass der rote Niederschlag hauptsächlich aus Natriumnitrat besteht. Die Rotfärbung ist auf die Mitfällung von eisenhaltigen Phasen zurückzuführen, die aufgrund der hohen Untergrundintensität jedoch nicht näher zugeordnet werden können.

Bei einem pH-Wert von ungefähr 6 fiel eine geringe Menge eines gelblichen Niederschlags aus. Daraufhin war die verbleibende Lösung farblos und klar.

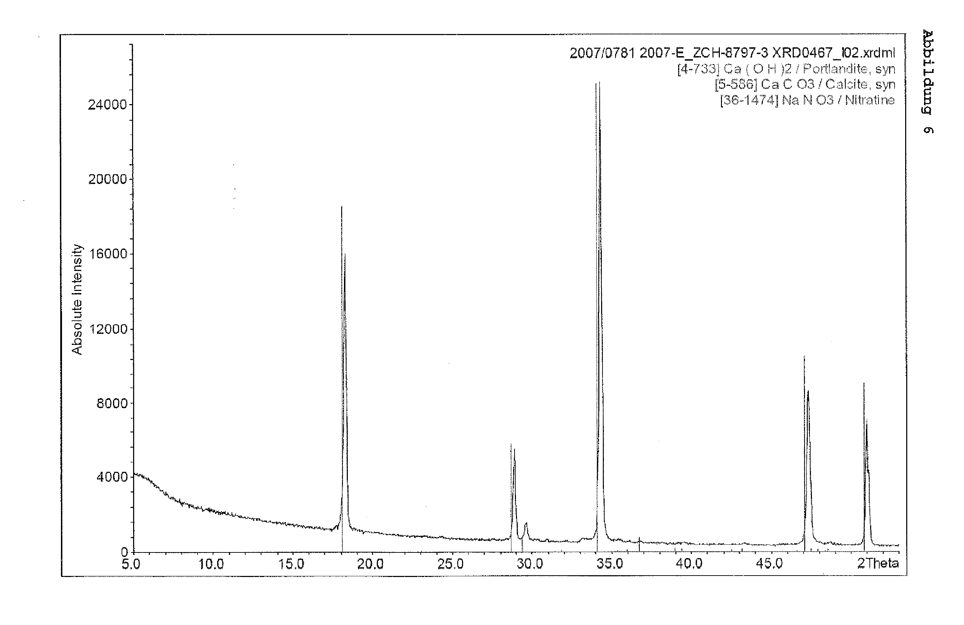

Bei einem pH-Wert von ungefähr 13 fiel ein weißer Niederschlag aus, der einer Röntgenbeugungsanalyse unterzogen wurde (Abbildung 6). Wie das Röntgendiffraktogramm zeigt, besteht der weiße Niederschlag nahezu ausschließlich aus Calciumhydroxid.

## Patentansprüche

1. Verfahren zur Herstellung von weißem Calciumhydroxid aus rotem Gips, der eine eisenhaltige Phase enthält, welches die folgenden Schritte umfasst:
(A) Mischen und Rühren des roten Gipses mit einer wässrigen alkalischen Lösung,
(B) Isolieren eines unlöslichen Rückstands,
(C) Lösen des Rückstands, wobei der pH-Wert der Lösung kleiner als 2,5 ist,
(D) Schrittweises Erhöhen des pH-Werts der Lösung aus (C) auf mindestens einen pH-Wert von 2,5,
(E) Fällen eines roten Niederschlags, wobei rot färbende eisenhaltige Verbindungen mitgefällt werden,
(F) Isolieren der verbleibenden Lösung,
(G) Schrittweises Erhöhen des pH-Werts der Lösung aus (F) auf mindestens einen pH-Wert von 6,
(H) Fällen eines Niederschlags und Isolieren der verbleibenden Lösung.

2. Verfahren gemäß Anspruch 1, welches weiterhin die folgenden Schritte umfasst:
(I) Schrittweises Erhöhen des pH-Werts der Lösung aus (H) auf mindestens einen pH-Wert von 13, und
(J) Isolieren eines weißen Niederschlags, der aus Calciumhydroxid besteht.

3. Verfahren gemäß Anspruch 1 oder 2, wobei die wässrige alkalische Lösung aus Schritt (A) eine wässrige Natriumhydroxidlösung und/oder eine wässrige Kaliumhydroxidlösung ist.

4. Verfahren gemäß mindestens einem der Ansprüche 1-3, wobei die Schritte (D) und/oder (G) und/oder wahlweise (I) jeweils mit einer wässrige Natriumhydroxidlösung und/oder einer wässrige Kaliumhydroxidlösung durchgeführt werden.

5. Verfahren gemäß Anspruch 3 oder 4, wobei die wässrige Natriumhydroxidlösung und/oder die wässrige Kaliumhydroxidlösung eine Konzentration von 1-2,5 mol/L aufweist.

6. Verfahren gemäß mindestens einem der Ansprüche 1-5, wobei Schritt (C) mit Salpetersäure oder einem Salpetersäure/Wasser Gemisch erfolgt.

7. Verfahren gemäß mindestens einem der Ansprüche 1-6, wobei der rote Niederschlag aus Schritt (E) neben einer mitgefällten rot färbenden eisenhaltigen Phase hauptsächlich aus Natriumnitrat und/oder Kaliumnitrat besteht.

8. Verfahren gemäß mindestens einem der Ansprüche 1-7, wobei Schritt (A) durch mindestens einstündiges Rühren erfolgt.

9. Verfahren gemäß mindestens einem der Ansprüche 1-8, wobei Schritte (B) und/oder (E) und/oder wahlweise (J) durch Filtration oder Vakuumfiltration durchgeführt werden und optional die Filtrationsrückstände mit Wasser gewaschen werden.

10. Verfahren gemäß mindestens einem der Ansprüche 1-9, wobei der rote Gips Goethit und/oder Hämatit enthält.

11. Verfahren gemäß mindestens einem der Ansprüche 2-10, wobei der weiße Niederschlag aus Calciumhydroxid besteht.

12. Verwendung eines "roten Gipses", der eine eisenhaltige Phase enthält, zur Herstellung von weißem Calciumhydroxid.

## Geänderte Patentansprüche

### Geänderte Patentansprüche gemäss Regel 137(2) EPÜ.

**1.** Verfahren zur Herstellung von weißem Calciumhydroxid aus rotem Gips, der eine eisenhaltige Phase enthält, welches die folgenden Schritte umfasst:
(A) Mischen und Rühren des roten Gipses mit einer wässrigen alkalischen Lösung,
(B) Isolieren eines unlöslichen Rückstands,
(C) Lösen des Rückstands, wobei der pH-Wert der Lösung kleiner als 2,5 ist,
(D) Schrittweises Erhöhen des pH-Werts der Lösung aus (C) auf mindestens einen pH-Wert von 2,5,
(E) Fällen eines roten Niederschlags, wobei rot färbende eisenhaltige Verbindungen mitgefällt werden,
(F) Isolieren der verbleibenden Lösung,
(G) Schrittweises Erhöhen des pH-Werts der Lösung aus (F) auf mindestens einen pH-Wert von 6,
(H) Fällen eines Niederschlags und Isolieren der verbleibenden Lösung,
(I) Schrittweises Erhöhen des pH-Werts der Lösung aus (H) auf mindestens einen pH-Wert von 13, und
(J) Isolieren eines weißen Niederschlags, der aus Calciumhydroxid besteht.

**2.** Verfahren gemäß Anspruch 1 oder 2, wobei die wässrige alkalische Lösung aus Schritt (A) eine wässrige Natriumhydroxidlösung und/oder eine wässrige Kaliumhydroxidlösung ist.

**3.** Verfahren gemäß mindestens einem der Ansprüche 1-3, wobei die Schritte (D) und/oder (G) und/oder wahlweise (I) jeweils mit einer wässrige Natriumhydroxidlösung und/oder einer wässrige Kaliumhydroxidlösung durchgeführt werden.

**4.** Verfahren gemäß Anspruch 3 oder 4, wobei die wässrige Natriumhydroxidlösung und/oder die wässrige Kaliumhydroxidlösung eine Konzentration von 1-2,5 mol/L aufweist.

**5.** Verfahren gemäß mindestens einem der Ansprüche 1-5, wobei Schritt (C) mit Salpetersäure oder einem Salpetersäure/Wasser Gemisch erfolgt.

**6.** Verfahren gemäß mindestens einem der Ansprüche 1-6, wobei der rote Niederschlag aus Schritt (E) neben einer mitgefällten rot färbenden eisenhaltigen Phase hauptsächlich aus Natriumnitrat und/oder Kaliumnitrat besteht.

**7.** Verfahren gemäß mindestens einem der Ansprüche 1-7, wobei Schritt (A) durch mindestens einstündiges Rühren erfolgt.

**8.** Verfahren gemäß mindestens einem der Ansprüche 1-8, wobei Schritte (B) und/oder (E) und/oder wahlweise (J) durch Filtration oder Vakuumfiltration durchgeführt werden und optional die Filtrationsrückstände mit Wasser gewaschen werden.

**9.** Verfahren gemäß mindestens einem der Ansprüche 1-9, wobei der rote Gips Goethit und/oder Hämatit enthält.

**10.** Verwendung eines "roten Gipses", der eine eisenhaltige Phase enthält, zur Herstellung von weißem Calciumhydroxid.
